# EUROPÄISCHE PATENTSCHRIFT

(11) **EP 2 739 880 B1**
(45) Veröffentlichungstag und Bekanntmachung des Hinweises auf die Patenterteilung: **07.02.2018**
(21) Anmeldenummer: 12735451.2
(22) Anmeldetag: 05.07.2012
(51) Int. Cl.: F16H 55/06, F16H 55/17, F16H 55/22, F16D 1/072, F16D 1/08

(54) **VERZAHNUNGSTEIL UND VERFAHREN ZUM HERSTELLEN EINES VERZAHNUNGSTEILS**
GEARING PART AND METHOD FOR PRODUCING A GEARING PART
ÉLÉMENT DE DENTURE ET PROCÉDÉ DE FABRICATION D'UN ÉLÉMENT DE DENTURE

(30) Priorität: 02.08.2011 DE 102011109104
(43) Veröffentlichungstag der Anmeldung: 11.06.2014
(73) Patentinhaber: Sew-Eurodrive GmbH & Co. KG, 76646 Bruchsal (DE)
(72) Erfinder: LEIBOLD, Hubert, 76694 Forst (DE); BOLZ, Heinrich, 76689 Karlsdorf-Neuthard (DE); GANZ, Klaus, 76694 Forst (DE)
(86) Internationale Anmeldenummer: PCT/EP2012/002816
(87) Internationale Veröffentlichungsnummer: WO 2013/017191

(56) Entgegenhaltungen:
- EP-A1- 2 103 827
- WO-A1-2011/153977
- DE-A1-102004 056 642
- DE-A1-102010 006 595
- DE-C1- 19 720 469
- JP-A- 2003 042 178

## Beschreibung

Die Erfindung betrifft ein Verzahnungsteil.

Als Verbundteile sind Teile bekannt, die aus zwei Teilkörpern zusammengesetzt sind und stoffschlüssig verbunden sind, beispielsweise verschweißt oder verlötet sind.

Aus der DE 10 2010 006 595 ist ein als Verbundteil ausgeführtes Verzahnungsteil bekannt. Aus der DE 10 2010 006595 A1 ist ein Verfahren zum Herstellen eines Verzahnungsteils bekannt.

Aus der EP 2 103 827 A1 ist ein Verzahnungsteil mit einer Welle-Nabe-Verbindung mit Polygon-Verbindung bekannt, welches unter den Wortlaut des Oberbegriffs des Anspruchs 1 fällt.

Aus der DE 197 20 469 C1 ist eine Welle-Nabe-Verbindung eines elektrischen Stellantriebs bekannt.

Aus der JP 2003 042178 A ist eine Welle-Naben-Verbindung mit Abflachung an der Welle bekannt.

Aus der DE 10 2004 056642 A1 sind einstellbare Profilkorrekturen mit mehreren Exzentrizitäten bekannt für formschlüssige Welle-Nabe-Verbindungen.

Aus der WO 2011/153977 A1 ist eine Welle-Nabe-Verbindung mit Unrund-Verbindung bekannt.

Der Erfindung liegt daher die Aufgabe zugrunde, ein Verzahnungsteil weiterzubilden, wobei das Verzahnungsteil möglichst kostensparend herstellbar sein soll.

Erfindungsgemäß wird die Aufgabe bei dem Verzahnungsteil nach den in Anspruch 1 angegebenen Merkmalen gelöst.

Wichtige Merkmale der Erfindung bei dem Verzahnungsteil sind, dass es einen Radkörper umfasst, der von einem Radkranz umgeben ist, wobei der Radkörper in einem ersten axialen Bereich einen unrund ausgebildeten Abschnitt umfasst, mit dem ein entsprechend geformter Abschnitt des Radkranzes verbunden ist.

Von Vorteil ist dabei, dass große Drehmomente vom Radkranz zum Radkörper durchleitbar sind. In Umfangsrichtung ist mittels der unrunden Ausführung eine leistungsfähige Verbindung erreicht. Ein unrundes Profil liegt dann vor, wenn der Radialabstand des Radkörpers in dem Abschnitt keine konstante Funktion des Winkels ist sondern eine nichtkonstante Funktion des Winkels. Besonders vorteilhaft ist hierbei eine periodische Funktion, deren Periodenlänge einer Umdrehung oder einem ganzzahligen Bruchteil einer Umdrehung entspricht, also 360°/2 = 180°, 360°/3 = 120°, 360°/4 = 90° oder 360°/n, wobei n eine ganze Zahl ist, die größer als 4 ist.

Mittels des unrunden Profils ist ein besonders dünnwandiger Radkranz mit dem Radkörper verbindbar und trotzdem das volle von den Zähnen der Verzahnung des Radkranzes übertragbare Drehmoment übertragbar.

Bei Auswählen einer Funktion, die stetig, stetig differenzierbar oder sogar glatt verläuft als Funktion des Winkels, ist ein Ausbrechen von Teilbereichen vermieden und somit eine besonders hohe Drehmomentübertragungssicherheit erreichbar. Bei einer vorteilhaften Ausgestaltung ist der Abschnitt des Radkörpers ein Außen-Unrund-Abschnitt und der Abschnitt des Radkranzes ein Innen-Unrund-Abschnitt.

Erfindungsgemäß sind die Abschnitte jeweils gestuft und/oder konisch ausgeführt Von Vorteil ist dabei, dass bei der gestuften Ausführung die Fügelänge verringert ist und bei der konischen Ausführung die Fügelänge im Wesentlichen vernachlässigbar ist. Somit ist ein sehr schnelles und einfaches Fügen ausführbar.

Bei einer vorteilhaften Ausgestaltung nehmen die Durchmesser, insbesondere Außendurchmesser beziehungsweise Innendurchmesser, der Abschnitte in einer axialen Richtung monoton zu, insbesondere bei der konischen Ausführung streng monoton. Von Vorteil ist dabei, dass ein Fügen von einer Seite und ein einstückiges Ausführen des Radkörpers sowie ein einstückiges Ausführen des Radkranzes in einfacher Weise ermöglicht ist.

Bei einer vorteilhaften Ausgestaltung sind bei der gestuften Ausführung mindestens drei Stufen vorgesehen. Von Vorteil ist dabei, dass eine verringerte Fügelänge und eine stabile Verbindung erreichbar sind.

Bei einer vorteilhaften Ausgestaltung ist die jeweilige axiale Länge jedes Stufungsabschnitts gleich lang. Von Vorteil ist dabei, dass ein einfaches und schnelles Fügen bei verringerter Fügelänge ermöglicht ist.

Bei einer vorteilhaften Ausgestaltung ist der Radkörper als Kupplungsteil ausgebildet, insbesondere wobei er an einer seiner Stirnseiten Klauen, insbesondere axial sich erstreckende Klauen zur Bildung einer Klauenkupplung, aufweist. Von Vorteil ist dabei, dass je nach Art der anzutreibenden Welle das aus Radkörper und Radkranz gebildete Nabenteil ausführbar ist, insbesondere ist das durch das Nabenteil durchzuleitende Drehmoment über eine Klauenkupplung zuführbar beziehungsweise abführbar, so dass das Nabenteil auch über ein Lager auf einer Achse oder Welle lagerbar wäre.

Bei einer vorteilhaften Ausgestaltung ist der unrunde Abschnitt als Polygon ausgeformt. Von Vorteil ist dabei, dass Herstellverfahren einsetzbar sind, bei denen die entsprechende Fertigungsmaschine kontinuierliche Bewegungen aller aktiven Maschinenachsen ausführt, insbesondere ohne Bewegungsrichtungsumkehr. Also sind Hin- und Herbewegungen vermieden und die damit notwendigen Beschleunigungen. Somit ist eine schnelle, einfache und preisgünstige Fertigung des Polygonalen Profils erreichbar.

Bei einer vorteilhaften Ausgestaltung ist der Radkranz auf den Radkörper aufgesteckt, insbesondere aufgepresst. Von Vorteil ist dabei, dass ein Verbinden, also Herstellen eines Verbundkörpers, sehr einfach und kostengünstig ausführbar ist. Das Aufpresskraft ist bei einer weiteren Ausgestaltung der Erfindung sogar bewirkbar durch die oder unter zusätzlicher Nutzung der Eigengewichtskraft des Radkranzes oder des Radkörpers, wobei vor dem Verbinden dieser auf das zu verbindende Teil aufgelegt wird.

Bei einer vorteilhaften Ausgestaltung ist der Radkranz aus einer Bronze gefertigt und der Radkörper aus einem Stahl oder Stahlguss. Von Vorteil ist dabei, dass der Radkranz dünnwandig ausführbar ist und somit kostspieliges Material, wie Bronze, einsparbar ist. Der Radkörper bewirkt außerdem eine hohe Stabilität bei geringen Kosten. Dünnwandig bedeutet mehr als ein halbes Modul der Verzahnung des Radkranzes. Die Wandstärke beträgt also zwischen einem halben und dem Zehnfachen des Moduls der Verzahnung, insbesondere zwischen einem halben und dem Vierfachen.

Bei einer vorteilhaften Ausgestaltung ist der Radialvorsprung an mindestens drei Umfangswinkelabschnitten eingeklipst in eine Ringnut, insbesondere kreisringförmige Nut, des Radkörpers. Von Vorteil ist dabei, dass eine stabile und wirksame axiale Sicherung in einfacher Weise erreichbar ist.

Bei einer vorteilhaften Ausgestaltung ist der unrund ausgebildete Abschnitt des Radkranzes als polygonal verlaufende, in axialer Richtung abgesetzt verlaufende Ausnehmung ausgeführt. Von Vorteil ist dabei, dass die axiale Sicherung in einfacher Weise herstellbar ist. Denn die polygonale Ausnehmung im Radkranz muss nur abgesetzt ausgeführt werden, also mit einer Stufe. Somit ist ein nach radial innen gerichteter Vorsprung, insbesondere ein als Nase ausgebildeter Vorsprung, einfach fertigbar.

Vorteiligerweise hat der Vorsprung eine Einführschräge, so dass das Einklipsen erleichtert ist.

Bei einer vorteilhaften Ausgestaltung ist das Verzahnungsteil ein Schneckenrad. Von Vorteil ist dabei, dass für die Verzahnung ein weiches kostengünstiges Material verwendbar ist und trotzdem kostengünstiger stabilitätsbewirkender Stahl verwendbar ist als Nabe zur Verbindung mit einer das Verzahnungsteil antreibenden oder vom Verzahnungsteil angetriebenen Welle.

Bei einer vorteilhaften Ausgestaltung ist zur axialen Sicherung am Radkörper ein Absatz, insbesondere ein ringförmiger Radialvorsprung, ausgebildet, insbesondere an welchem der Radkranz mit einer seiner Stirnseiten anliegt. Von Vorteil ist dabei, dass eine axiale Sicherung in kostengünstiger Weise erreichbar ist.

Bei einer vorteilhaften Ausgestaltung ist als weitere axiale Sicherung ein Sicherungsring, ein Sprengring oder dergleichen in einer in Umfangsrichtung umlaufenden ringförmigen Nut des Radkörpers und/oder des Radkranzes vorgesehen. Von Vorteil ist dabei, dass eine axiale Sicherung in kostengünstiger Weise erreichbar ist, wobei axiale Toleranzen bis zu einem kritischen Maß kompensierbar sind, indem die Nut und der Ring entsprechend dimensioniert werden. Erfindungsgemäß ist als weitere axiale Sicherung ein nach radial innen sich erstreckender ringförmiger Vorsprung, insbesondere inneres Absatz, am Radkranz vorgesehen, welcher in eine ringförmige Nut des Radkörpers eingeklipst ist. Von Vorteil ist dabei, dass eine axiale Sicherung in kostengünstiger Weise am Radkranz ausbildbar ist, die einstückig ausführbar ist.

Weitere Vorteile ergeben sich aus den Unteransprüchen.

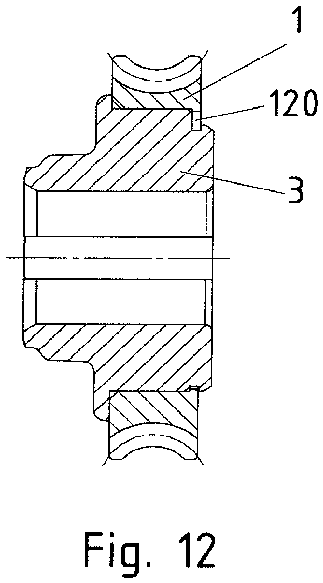

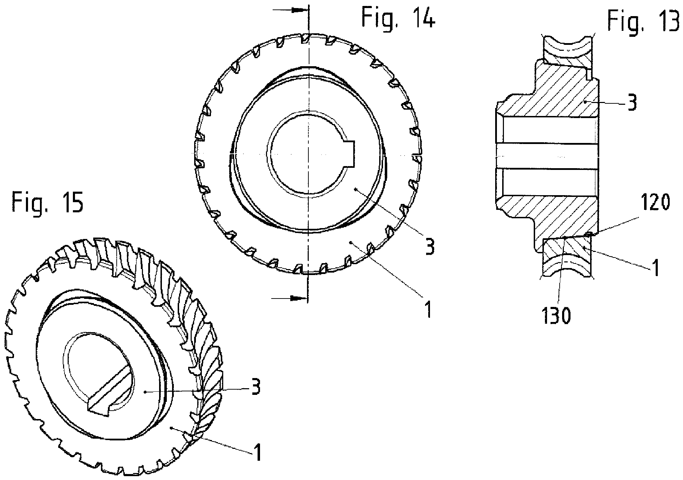

Die Erfindung wird nun anhand von Abbildungen näher erläutert, wobei nur die Figuren 12 und 13 ein Verzahnungsteil mit einem wie im kennzeichnenden Teil des Anspruchs 1 genannten, radial nach innen sich erstreckenden ringförmigen Vorsprung am Radkranz zeigen.
In der Figur 1 ist als erstes Ausführungsbeispiel ein Verzahnungsteil in Schrägansicht gezeigt, wobei Radkranz 1 und Radkörper 3 kraftschlüssig verbunden sind.
In der Figur 2 ist eine zugehörige Draufsicht gezeigt.
In der Figur 3 ist ein zugehöriger Querschnitt gezeigt.
In der Figur 4 ist als zweites Ausführungsbeispiel ein Verzahnungsteil in Schrägansicht gezeigt, wobei Radkranz 1 und Radkörper 3 formschlüssig verbunden sind, wobei ein Sicherungsring 60 verwendet ist zur axialen Sicherung.
In der Figur 5 ist eine zugehörige Draufsicht gezeigt.
In der Figur 6 ist ein zugehöriger Querschnitt gezeigt.
In der Figur 7 ist als zweites Ausführungsbeispiel ein Verzahnungsteil in Schrägansicht gezeigt, wobei Radkranz 1 und Radkörper 3 formschlüssig verbunden sind, wobei Stiftschrauben im Verbindungsbereich vorgesehen sind.
In der Figur 8 ist eine zugehörige Draufsicht gezeigt.
In der Figur 9 ist ein zugehöriger Querschnitt gezeigt.
In der Figur 10 ist als zweites Ausführungsbeispiel ein Verzahnungsteil in Schrägansicht gezeigt, wobei Radkranz 1 und Radkörper 3 formschlüssig verbunden sind, wobei ein nach innen gerichteter Absatz 120 als axiale Sicherung wirkt.
In der Figur 11 ist eine zugehörige Draufsicht gezeigt.
In der Figur 12 ist ein zugehöriger Querschnitt gezeigt.
In der Figur 13 ist als Ausführungsbeispiel ein Verzahnungsteil in Schnittansicht gezeigt, wobei der Radkranz 1 mit dem Radkörper 3 kraftschlüssig verbunden ist, wobei die Verbindungsfläche konisch ausgeführt ist, und zur axialen Sicherung ein in Umfangsrichtung verlaufender, nach radial innen gerichteter Vorsprung am Radkranz 1 eingeklipst ist in eine Vertiefung des Radkörpers 3, die als Ringnut ausgeführt ist. Dabei ist eine im Wesentlichen verschwindende Fügelänge erreichbar, weil bei Anlegen des konischen Außenflächenabschnitts des Radkörpers 3 an den zugeordneten konischen Innenflächenabschnitt des Radkranzes 1 nur ein Aufbringen der Fügekraft notwendig ist, wobei aber ein im Wesentlichen verschwindender Fügeweg benötigt wird.
In der Figur 14 ist eine zugehörige Draufsicht gezeigt.
In der Figur 15 ist eine zugehörige Schrägansicht gezeigt.
In der Figur 16 ist als Ausführungsbeispiel ein Verzahnungsteil in Schnittansicht gezeigt, wobei der Radkranz 1 mit dem Radkörper 3 kraftschlüssig verbunden ist, wobei die Verbindungsfläche konisch ausgeführt ist, und zur axialen Sicherung in Umfangsrichtung regelmäßig voneinander beabstandete, axial ausgerichtete Stiftschrauben im Verbindungsbereich angeordnet sind.
In der Figur 17 ist eine zugehörige Draufsicht gezeigt.
In der Figur 18 ist eine zugehörige Schrägansicht gezeigt.
In der Figur 19 ist als Ausführungsbeispiel ein Verzahnungsteil in Schnittansicht gezeigt, wobei der Radkranz 1 mit dem Radkörper 3 kraftschlüssig verbunden ist, wobei die Verbindungsfläche konisch ausgeführt ist, und zur axialen Sicherung ein Sicherungsring axial benachbart zum kraftschlüssigen Verbindungsbereich angeordnet sind.
In der Figur 20 ist eine zugehörige Draufsicht gezeigt.
In der Figur 21 ist eine zugehörige Schrägansicht gezeigt.

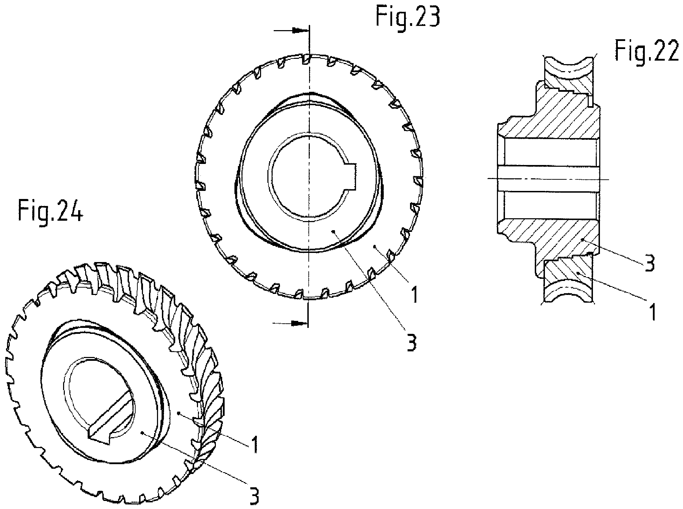

In der Figur 22 ist als Ausführungsbeispiel ein Verzahnungsteil in Schnittansicht gezeigt, wobei der Radkranz 1 mit dem Radkörper 3 kraftschlüssig verbunden ist, wobei die Verbindungsfläche gestuft ausgeführt ist. Dabei nehmen die Durchmesser des Radkörpers 3 in einer axialen Richtung monoton zu im Verbindungsbereich, so dass ein Fügen von einer Seite einfach und mit geringer Fügelänge ausführbar ist. Zur axialen Sicherung ist ein in Umfangsrichtung verlaufender, nach radial innen gerichteter Vorsprung am Radkranz 1 eingeklipst ist in eine Vertiefung des Radkörpers 3, die als Ringnut ausgeführt ist.
In der Figur 23 ist eine zugehörige Draufsicht gezeigt.
In der Figur 24 ist eine zugehörige Schrägansicht gezeigt.

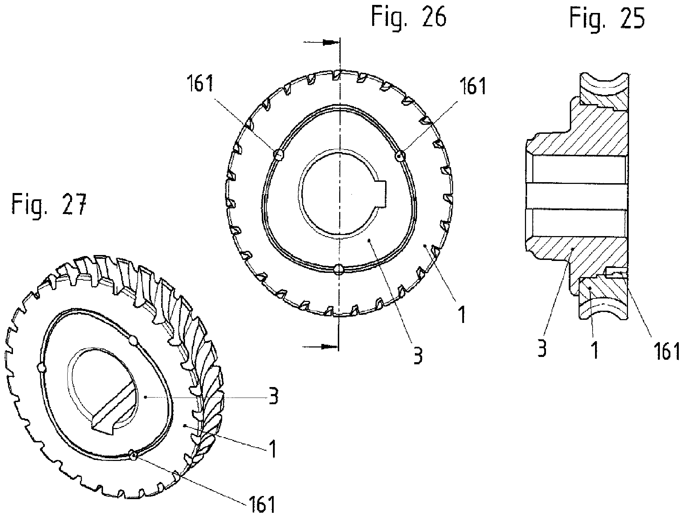

In der Figur 25 ist als erfindungsgemäßes Ausführungsbeispiel ein Verzahnungsteil in Schnittansicht gezeigt, wobei der Radkranz 1 mit dem Radkörper 3 kraftschlüssig verbunden ist, wobei die Verbindungsfläche gestuft ausgeführt ist, und zur axialen Sicherung wiederum axial ausgerichtete, in Umfangsrichtung regelmäßig voneinander beabstandete Stiftschrauben 161 im kraftschlüssigen Verbindungsbereich angeordnet sind. Dabei nehmen die Durchmesser des Radkörpers 3 in einer axialen Richtung monoton zu im Verbindungsbereich, so dass ein Fügen von einer Seite einfach und mit geringer Fügelänge ausführbar ist.
In der Figur 26 ist eine zugehörige Draufsicht gezeigt.
In der Figur 27 ist eine zugehörige Schrägansicht gezeigt.
In der Figur 28 ist als Ausführungsbeispiel ein Verzahnungsteil in Schnittansicht gezeigt, wobei der Radkranz 1 mit dem Radkörper 3 kraftschlüssig verbunden ist, wobei die Verbindungsfläche gestuft ausgeführt ist, und zur axialen Sicherung wiederum ein Sicherungsring 191 axial benachbart zum Verbindungsbereich angeordnet ist. Dabei nehmen die Durchmesser des Radkörpers 3 in einer axialen Richtung monoton zu im Verbindungsbereich, so dass ein Fügen von einer Seite einfach und mit geringer Fügelänge ausführbar ist.
In der Figur 29 ist eine zugehörige Draufsicht gezeigt.
In der Figur 30 ist eine zugehörige Schrägansicht gezeigt.

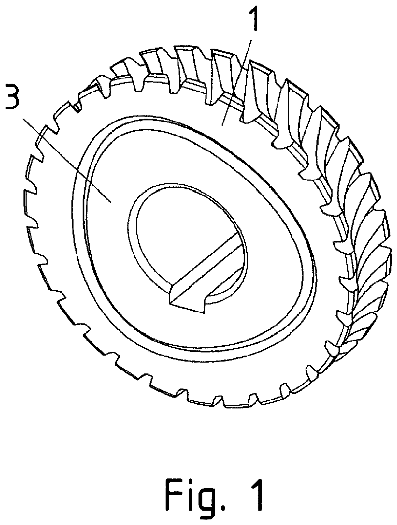

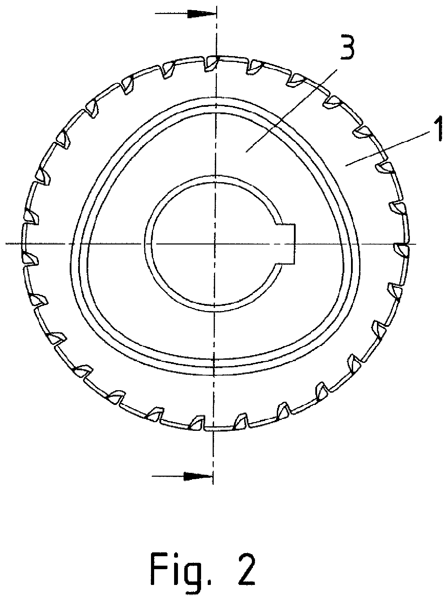

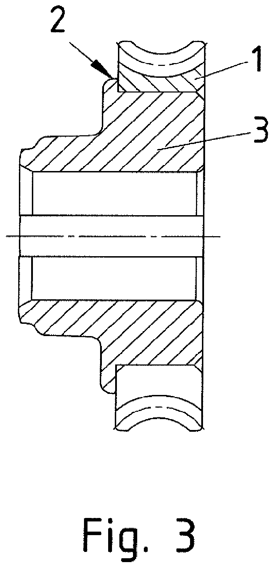

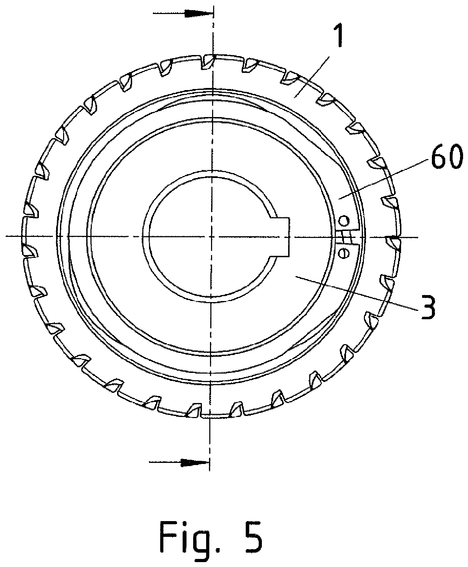

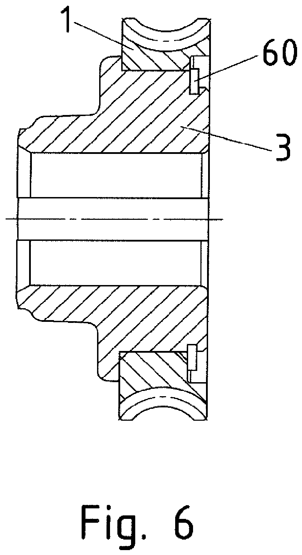

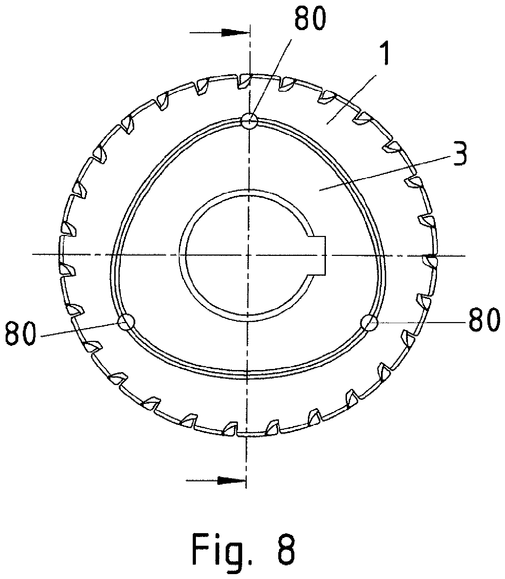

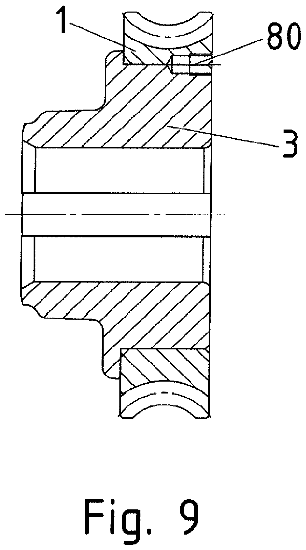

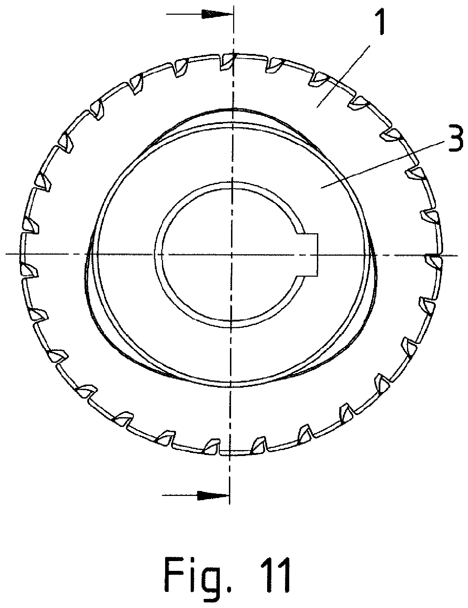

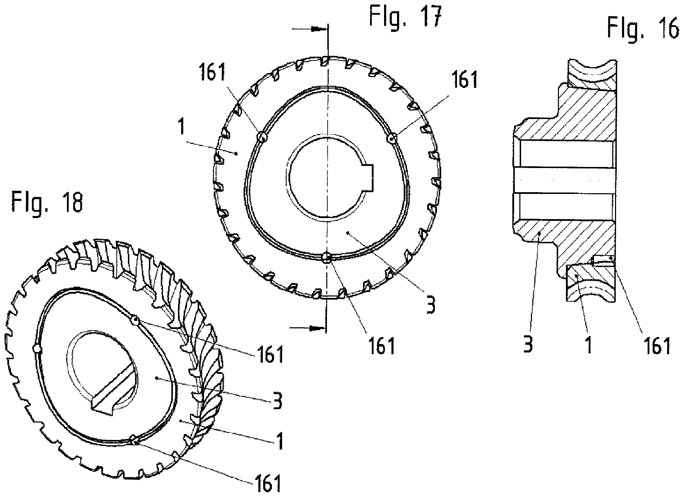

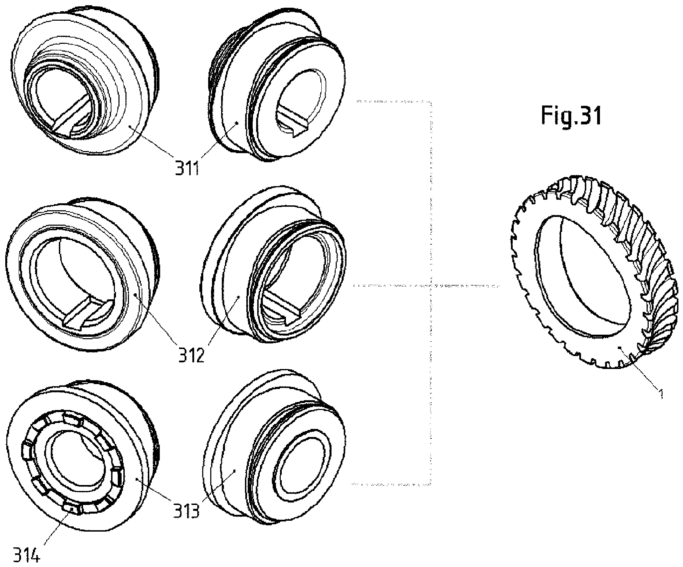

In der Figur 31 ist gezeigt, wie ein Radkranz 1 auf verschieden ausgeprägte Radkörper 311, 312, 313 verbindbar ist. Dabei ist die Schnittstelle zwischen den beiden Teilen im Bereich der jeweiligen konischen Flächenabschnitte gleichartig ausgeführt, wobei der Radkörper 311 eine kleinere Nabenöffnung aufweist und somit nur auf eine Welle mit kleinerem Durchmesser aufsetzbar ist als der Radkörper 312. Der Radkörper 313 ist an einer seiner axialen Stirnseiten mit axial ausgerichteten Klauen 314 versehen, so dass er als Teil einer Klauenkupplung einsetzbar ist. Somit ist also der Radkranz 1 je nach Anforderung mit verschiedenen Radkörpern verbindbar. Die axiale Sicherung ist dabei ebenso wie die konische oder gestufte Ausführung des Verbindungsabschnitts ausführbar, wie in den Figuren 1 bis 30 gezeigt.

In den Figuren 1 bis 3 ist ein Radkranz 1 gezeigt, der auf einen unrunden Abschnitt eines Radkörpers aufgesetzt ist. Dabei ist beispielhaft ein Schneckenrad gebildet, welches in einem Schneckenradgetriebe vorsehbar ist.

Der Radkörper wiederum weist eine Passfedernut an seiner Innenseite auf und ist somit formschlüssig verbindbar mit einer Welle. Er ist außerdem aus einem kostengünstigen stabilen Material fertigbar, wie Stahl oder dergleichen.

Der Radkranz ist beispielsweise aus Bronze herstellbar und weist nur eine kleine radiale Wandstärke auf. Somit ist das kostspielige Material des Radkranzes einsparbar und ein großer Radkörper 3 aus kostengünstigem Material einsetzbar, insbesondere wobei das Material des Radkörpers kostengünstiger ist als das Material des Radkranzes.

Der Radkranz ist aus einem weicheren Material fertigbar im Vergleich zum Material des Radkörpers. Somit ist vorzugsweise ein Schneckenrad herstellbar.

Das über ein mit dem Radkranz im Eingriff stehende Verzahnungsteil übertragene Drehmoment wird vom Radkranz zum Radkörper übertragen. Dabei wird eine zumindest in Umfangsrichtung wirksame formschlüssige Verbindung verwendet. Diese ist mittels einer unrunden Ausformung realisiert. Hierbei weist der Radkörper 3 einen Abschnitt auf, der sich über einen axialen Bereich erstreckt. In Umfangsrichtung ist der Radialabstand zur Achse des Radkörpers nicht konstant. Der Abschnitt ist also unrund.

Vorzugsweise wird für den Abschnitt eine polygonales Profil gewählt, da diese besonders einfache und effektiv herstellbar ist. Bei Polygonprofilen, die einer Hypotrochoide oder Epitrochoide entsprechen oder davon abgeleitet sind, ist eine sehr schnelle Fertigung erreichbar.

Der Radkranz 1 weist an seiner Innenseite ebenfalls ein dem unrunden Profil des Abschnitts des Radkörpers 3 entsprechende Ausformung auf. Somit ist der Radkranz in axialer Richtung auf den Radkörper 3 aufschiebbar und/oder aufpressbar und bildet somit einen Verbundkörper.

In Weiterbildung ist auch ein derartiges Profil des Abschnitts und der Innenseite wählbar, dass nur bei vor dem Aufschieben oder Aufpressen hergestellten unterschiedlichen Temperaturen des Radkranzes 1 und des Radkörpers 3 ein spanfreies Aufpressen ermöglicht ist. Hierzu wird der Temperaturunterschied derart groß gewählt, dass der Radkranz thermisch bedingt derart vergrößert ist, dass ein Aufschieben oder Aufpressen ohne besonders hohen Kraftaufwand erreichbar ist.

Vorzugsweise ist ein Aufschieben sogar schon durch das Eigengewicht des Radkranzes erreichbar. Hierbei wird der erwärmte Radkranz auf den Radkörper aufgelegt, wobei die Achsrichtung in Gravitationsrichtung zeigt.

Nach dem Verbinden und nach dem Annähern der Temperaturen des Radkranzes und des Radkörpers ist somit eine kraftschlüssige Verbindung hergestellt, die ohne zerstörende Wirkung auf den Radkranz praktisch unlösbar ist.

Am Radkörper ist in einem axialen Bereich, der vorzugsweise unterschiedlich ist von demjenigen axialen Bereich, welcher den unrunden Abschnitt umfasst, ein axialer Anschlag für den Radkranz gebildet, indem ein Absatz 2 als ringförmiger nach radial außen weisender Radialvorsprung ausgeformt ist. Der Anschlag ist insbesondere beim Zusammenfügen des Radkranzes 1 und des Radkörpers 3 wirksam.

Der Radkörper ist als Hohlteil ausgeführt, welches an seiner Innenseite eine axial verlaufende Passfedernut zur formschlüssigen Passfeder-Verbindung mit einer einsteckbaren Welle.

Statt eines Schneckenrades ist die Erfindung aber auch auf andere Verzahnungsteile anwendbar, insbesondere Zahnräder.

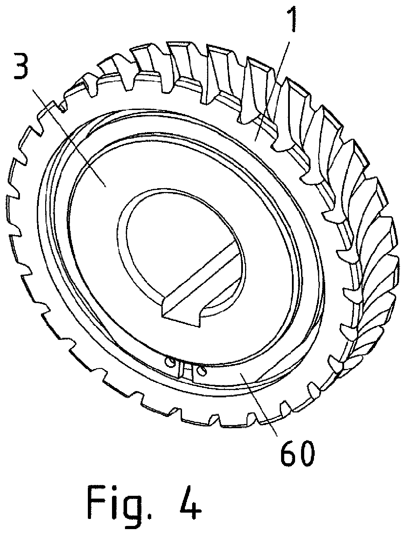

In den Figuren 4 bis 6 ist ein weiteres Ausführungsbeispiel gezeigt, welches im Unterschied zum Ausführungsbeispiel nach Figur 1 zusätzlich einen Sicherungsring 60 aufweist, der axial vor demjenigen axialen Bereich, welcher den unrunden Abschnitt umfasst, angeordnet ist. Der vorgenannte Anschlag, welcher durch den Absatz 2 gebildet ist, der als ringförmiger nach radial außen weisender Radialvorsprung ausgeformt ist, ist axial hinter demjenigen axialen Bereich, welcher den unrunden Abschnitt umfasst, angeordnet.

Somit ist eine wirksame axiale Sicherung des Radkranzes 1 auf dem Radkörper 3 erreicht.

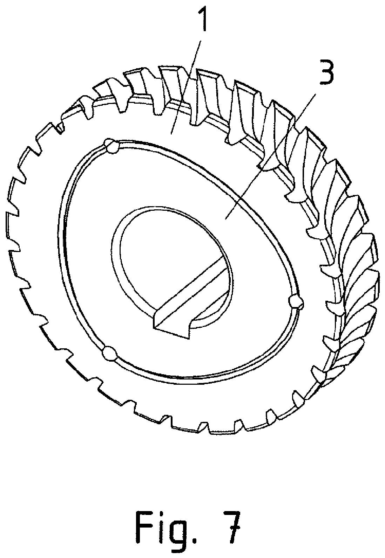

In den Figuren 7 bis 9 ist ein weiteres Ausführungsbeispiel gezeigt, welches im Unterschied zum Ausführungsbeispiel nach Figur 1 zusätzlich Stiftschrauben 80 aufweist, die im Verbindungsbereich zwischen Radkörper 3 und Radkranz 1 in axialer Richtung eingeschraubt sind. Somit ist hierdurch eine formschlüssige Verbindung in axialer Richtung erreicht. Die Stiftschrauben 80 würden bei Versagen der unrunden formschlüssigen Verbindung sogar in Umfangsrichtung Drehmoment übertragbar machen.

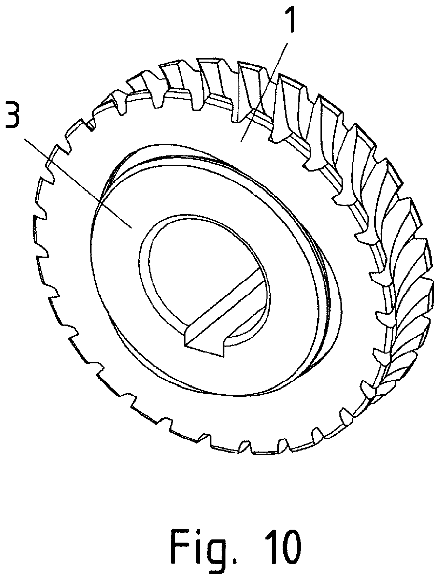

In den Figuren 10 bis 12 ist ein weiteres Ausführungsbeispiel gezeigt, wobei der Radkranz 1 im Unterschied zum Ausführungsbeispiel nach Figur 1 zusätzlich einen nach radial innen gerichteten Absatz 120 aufweist, der axial hinter dem Abschnitt angeordnet ist, in welchem der unrunde Verbindungsbereich angeordnet ist. Somit ist eine axiale Sicherung durch einen nach außen gerichteten radialen Vorsprung am Radkörper und einen nach radial innen gerichteten radialen Vorsprung am Radkranz hergestellt.

Die Radkränze 1 der Figuren 13 bis 31 weisen ebenfalls im Verbindungsbereich einen unrunden Abschnitt auf, der im Gegensatz zum unrunden Verbindungsabschnitt des Radkranzes 1 nach Figur 1 konisch oder zumindest gestuft ausgeführt ist. Ebenso ist der entsprechende Verbindungsabschnitt des Radkörpers 3 ausgeführt, also konisch oder zumindest gestuft.

In der Figur 13 ist der unrund und gleichzeitig konisch ausgeführte Verbindungsabschnitt an seinem ersten axialen Ende begrenzt durch eine Stufe des Radkörpers 3, an welchem er anliegt und somit axial begrenzt ist. An seinem anderen Ende weist der Radkranz einen sich in Umfangsrichtung entlang der unrunden Ausnehmung sich in radialer Richtung erstreckenden Vorsprung auf, mit welchem er formschlüssig, insbesondere eingeklipst, gehalten ist in einer in Umfangsrichtung sich erstreckenden Nut, insbesondere Ringnut, welche am Radkörper angeordnet ist und kreisförmig verläuft. Somit ragt der Vorsprung 120 nur an drei Umfangswinkel-Abschnitten in die Nut hinein und sichert somit den Radkranz 1 gegen den Radkörper 3 in axialer Richtung.

Der Vorsprung ist dabei durch Ausführen der polygonalen Bohrung oder Ausnehmung im Radkranz 1 als abgesetzte polygonale Bohrung beziehungsweise Ausnehmung einfach und kostengünstig erzeugbar.

Der konische Abschnitt ist derart ausgerichtet, dass die Mittelachse des Konus mit der Mittelachse des Radkranzes 1 und des Radkörpers 3 zusammenfällt. Dabei nimmt der Durchmesser des Konus zum ersten axialen Endbereich hinzu. Somit ist die Fügelänge beim Verbinden verschwindend klein. Der Konuswinkel ist kleiner als 10°, insbesondere kleiner als 5°. Insbesondere ist der Winkel derart gewählt, dass eine Selbsthemmung entsprechend der gewählten Materialpaarung zwischen Radkörper und Radkranz vorhanden ist.

Der Radkranz 1 ist wie bei den anderen Ausführungsbeispielen gemäß den anderen Figuren vorzugsweise aus Bronze oder einer anderen Kupfer-haltigen Legierung. Entsprechend ist der Radkörper 3 aus Stahl und weist eine Nabenöffnung auf, welche eine Passfedernut enthält.

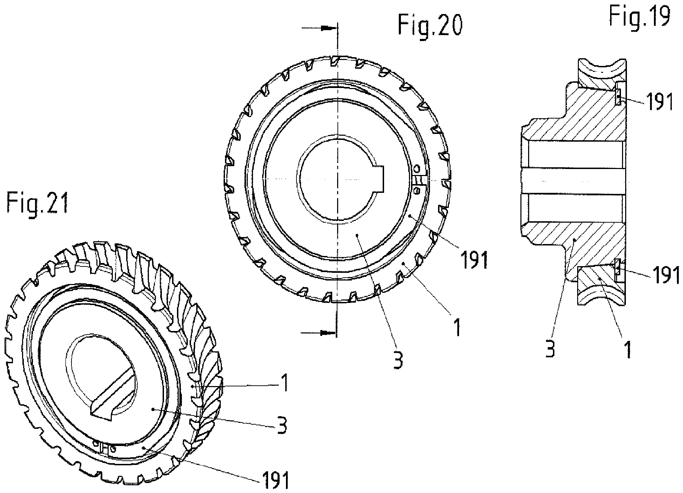

Bei den Figuren 19 bis 21 ist die axiale Sicherung durch den Sicherungsring 191 bewirkt, welcher in einer kreisringförmig verlaufenden Nut des Radkörpers 3 angeordnet ist. Infolge des unrunden Verbindungsabschnitts ragt der Sicherungsring an drei Umfangswinkel-Abschnitten mehr aus der Nut heraus als in den übrigen Abschnitten. Somit ist die axiale Sicherung hauptsächlich bewirkt von den stärker herausragenden Bereichen.

Bei der Figur 22 und 23 ist der Verbindungsabschnitt gestuft ausgeführt. Dabei ist jeder Stufungsabschnitt mit verschwindendem Konuswinkel ausgeführt. Somit ist zwar eine Fügelänge vorhanden; diese entspricht aber der axialen Länge des jeweiligen Stufungsabschnitts. Somit ist die Fügelänge kleiner als bei einer Ausführung nach Figur 1, wo die Fügelänge der axialen Länge des gesamten Verbindungsabschnitts entspricht. In den Figuren 25 bis 27 ist eine axiale Sicherung mittels Stiftschrauben 161 gezeigt, die in axialer Richtung im Verbindungsbereich angeordnet sind.

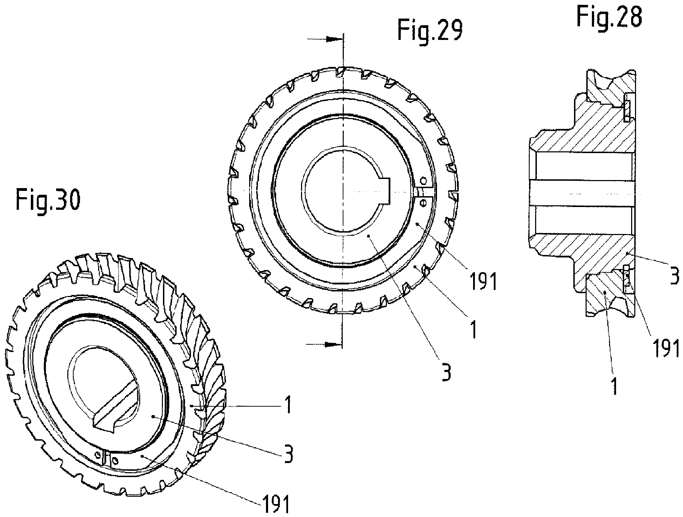

In der Figur 28 und 29 ist eine axiale Sicherungsring 191 gezeigt, der in einer kreisringförmigen Nut des Radkörpers 1 angeordnet ist und an drei Umfangswinkelbereichen den Sicherungsring 191 in radialer Richtung überragt. Somit ist in den anderen Umfangswinkelbereichen ein wesentlicher Beitrag zur axialen Sicherung erreichbar.

In der Figur 31 ist schematisch ein Baukasten skizziert, bei dem ein Radkranz 1 auf mehrere, zueinander unterschiedliche Radkörper 3 aufsetzbar ist. Somit sind verschiedene Nabenteile (311, 312, 313) verbindbar, beispielsweise auch ein als Kupplungsteil verwendbares Nabenteil, und somit verschiedene Funktionen realisierbar.

Bei anderen erfindungsgemäßen Ausführungsbeispielen ist im Unterschied zu den in den Figuren gezeigten Ausführungsbeispielen mit gestuften Verbindungsabschnitten der jeweilige Stufungsabschnitt mit einem nicht verschwindenden Konuswinkel ausgeführt, wobei der Konuswinkel aber auf jeden Fall kleiner 10° beträgt.

### Bezugszeichenliste

- 1: Radkranz
- 2: Absatz, ringförmiger Radialvorsprung
- 3: Radkörper
- 60: Sicherungsring
- 80: Stiftschrauben
- 120: Absatz, nach radial innen gerichtet

## Patentansprüche

1. Verzahnungsteil, umfassend einen Radkörper (3), der von einem Radkranz (1) umgeben ist, wobei der Radkörper (3) in einem ersten axialen Bereich einen unrund ausgebildeten Abschnitt umfasst, mit dem ein entsprechend geformter Abschnitt des Radkranzes verbunden ist, wobei die Abschnitte jeweils gestuft und/oder konisch ausgeführt sind, wobei zur axialen Sicherung am Radkörper (3) in einem zweiten axialen Bereich ein Absatz (2-Fig.3) ausgebildet ist, **dadurch gekennzeichnet, dass** als weitere axiale Sicherung ein nach radial innen sich erstreckender ringförmiger Vorsprung (120-Fig.12-15) am Radkranz (1) vorgesehen ist, welcher in eine ringförmige Nut des Radkörpers eingeklipst ist.

2. Verzahnungsteil nach Anspruch 1,
**dadurch gekennzeichnet, dass**
der Abschnitt des Radkörpers ein Außen-Unrund-Abschnitt ist und der Abschnitt des Radkranzes ein Innen-Unrund-Abschnitt ist.

3. Verzahnungsteil nach einem der vorangegangenen Ansprüche,
**dadurch gekennzeichnet, dass**
die Durchmesser, insbesondere Außendurchmesser beziehungsweise Innendurchmesser, der Abschnitte in einer axialen Richtung monoton zunehmen, insbesondere bei der konischen Ausführung streng monoton zunehmen.

4. Verzahnungsteil nach einem der vorangegangenen Ansprüche,
**dadurch gekennzeichnet, dass**
bei der gestuften Ausführung mindestens drei Stufen vorgesehen sind.

5. Verzahnungsteil nach einem der vorangegangenen Ansprüche,
**dadurch gekennzeichnet, dass**
die jeweilige axiale Länge jedes Stufungsabschnitts gleich lang ist.

6. Verzahnungsteil nach einem der vorangegangenen Ansprüche,
**dadurch gekennzeichnet, dass**
der Radkörper als Kupplungsteil ausgebildet ist, insbesondere wobei er an einer seiner Stirnseiten Klauen, insbesondere axial sich erstreckende Klauen zur Bildung einer Klauenkupplung, aufweist.

7. Verzahnungsteil nach einem der vorangegangenen Ansprüche,
**dadurch gekennzeichnet, dass**
axial vor und/oder hinter dem ersten axialen Bereich eine Axialsicherung zur Sicherung von axialen relativen Bewegungen von Radkranz gegen Radkörper angeordnet ist.

8. Verzahnungsteil nach einem der vorangegangenen Ansprüche,
**dadurch gekennzeichnet, dass**
der unrunde Abschnitt als Hypotrochoide, Epitrochoide oder davon abgeleitetes Polygon ausgeformt ist.

9. Verzahnungsteil nach einem der vorangegangenen Ansprüche,
**dadurch gekennzeichnet, dass**
der Radkranz auf den Radkörper aufgesteckt ist, insbesondere aufgepresst ist.

10. Verzahnungsteil nach einem der vorangegangenen Ansprüche,
**dadurch gekennzeichnet, dass**
der Radkranz aus einer Bronze gefertigt ist und der Radkörper aus einem Stahl oder Stahlguss,
und/oder dass
das Verzahnungsteil ein Schneckenrad ist.

11. Verzahnungsteil nach einem der vorangegangenen Ansprüche,
**dadurch gekennzeichnet, dass**
der Absatz als ringförmiger Radialvorsprung, ausgebildet ist, insbesondere an welchem der Radkranz mit einer seiner Stirnseiten anliegt, insbesondere wobei der zweite axiale Bereich axial hinter dem ersten axialen Bereich angeordnet ist.

12. Verzahnungsteil nach einem der vorangegangenen Ansprüche, **dadurch gekennzeichnet, dass**
der Radialvorsprung an mindestens drei Umfangswinkelabschnitten eingeklipst ist in eine
Ringnut, insbesondere kreisringförmige Nut, des Radkörpers.

13. Verzahnungsteil nach einem der vorangegangenen Ansprüche, **dadurch gekennzeichnet, dass**
als weitere axiale Sicherung ein Sicherungsring, ein Sprengring oder dergleichen in einer in Umfangsrichtung umlaufenden ringförmigen Nut des Radkörpers und/oder des Radkranzes in einem dritten axialen Bereich vorgesehen ist, insbesondere wobei der dritte axiale Bereich axial vor dem ersten axialen Bereich angeordnet ist
und/oder dass
der unrund ausgebildete Abschnitt des Radkranzes als polygonal verlaufende, in axialer Richtung abgesetzt verlaufende Ausnehmung ausgeführt ist.

14. Verzahnungsteil nach einem der vorangegangenen Ansprüche, **dadurch gekennzeichnet, dass**
der Vorsprung eine Einführschräge aufweist.

## Claims

1. Toothing part,
comprising a wheel body (3) which is surrounded by a wheel rim (1),
wherein the wheel body (3) comprises in a first axial region a portion of non-circular form, to which a correspondingly shaped portion of the wheel rim is connected,
wherein the portions are each of stepped and/or conical design,
wherein for axial securing on, the wheel body (3) a shoulder (2-Fig. 3) is formed in a second axial region,
**characterised in that**
as further axial securing a radially inwardly extending ring-shaped projection (120-Fig. 12-15) is provided on the wheel rim (1), which projection is clipped into a ring-shaped groove of the wheel body.

2. Toothing part according to claim 1,
**characterised in that**
the portion of the wheel body is an outer non-circular portion and the portion of the wheel rim is an inner non-circular portion.

3. Toothing part according to one of the preceding claims,
**characterised in that**
the diameters, in particular outer diameters and inner diameters, of the portions increase monotonically in an axial direction, in particular in the conical design increase strictly monotonically.

4. Toothing part according to one of the preceding claims,
**characterised in that**
in the stepped design at least three steps are provided.

5. Toothing part according to one of the preceding claims,
**characterised in that**
the respective axial length of each step portion is of equal length.

6. Toothing part according to one of the preceding claims,
**characterised in that**
the wheel body is formed as a coupling part, in particular wherein it has at one of its end faces claws, in particular axially extending claws, for forming a claw coupling.

7. Toothing part according to one of the preceding claims,
**characterised in that**
an axial securing for securing axial relative movements of the wheel rim with respect to the wheel body is arranged axially in front of and/or behind the first axial region.

8. Toothing part according to one of the preceding claims,
**characterised in that**
the non-circular portion is shaped as a hypotrochoid, epitrochoid or a polygon derived therefrom.

9. Toothing part according to one of the preceding claims,
**characterised in that**
the wheel rim is slipped onto, in particular is pressed onto, the wheel body.

10. Toothing part according to one of the preceding claims,
**characterised in that**
the wheel rim is made from bronze and the wheel body from a steel or cast steel,
and/or **in that**
the toothing part is a worm wheel.

11. Toothing part according to one of the preceding claims,
**characterised in that**
the shoulder is formed as a ring-shaped radial projection, in particular on which the wheel rim rests with one of its end faces, in particular wherein the second axial region is arranged axially behind the first axial region.

12. Toothing part according to one of the preceding claims,
**characterised in that**
the radial projection is clipped, at at least three circumferential angle portions, into a ring groove, in particular a circular-ring-shaped groove, of the wheel body.

13. Toothing part according to one of the preceding claims,
**characterised in that**
as further axial securing, a securing ring, a spring ring or the like is provided in a circumferentially directed encircling ring-shaped groove of the wheel body and/or of the wheel rim in a third axial region, in particular wherein the third axial region is arranged axially in front of the first axial region
and/or **in that**
the non-circularly formed portion of the wheel rim is designed as a polygonally running cutout running offset in the axial direction.

14. Toothing part according to one of the preceding claims,
**characterised in that**
the projection has an insertion bevel.

## Revendications

1. Elément d'engrenage,
comprenant un corps de roue (3) qui est entouré par une couronne (1),
sachant que le corps de roue (3) comprend dans une première région axiale un segment réalisé ovalisé, auquel est relié un segment de forme correspondante de la couronne,
sachant que les segments sont respectivement réalisés étagés et/ou coniques,
sachant que pour le blocage axial, un gradin (2 - figure 3) est formé dans une deuxième région axiale sur le corps de roue (3),
**caractérisé en ce qu'**une saillie annulaire (120 - figures 12-15) s'étendant radialement vers l'intérieur est prévue sur la couronne (1) comme blocage axial supplémentaire, saillie qui est encliquetée dans une rainure annulaire du corps de roue.

2. Elément d'engrenage selon la revendication 1, **caractérisé en ce que** le segment du corps de roue est un segment ovalisé extérieur et le segment de la couronne est un segment ovalisé intérieur.

3. Elément d'engrenage selon l'une des revendications précédentes, **caractérisé en ce que** les diamètres, en particulier le diamètre extérieur ou respectivement le diamètre intérieur, des segments augmentent de façon monotone dans une direction axiale, en particulier augmentent de façon strictement monotone pour l'exécution conique.

4. Elément d'engrenage selon l'une des revendications précédentes, **caractérisé en ce que**, pour l'exécution étagée, il est prévu au moins trois étages.

5. Elément d'engrenage selon l'une des revendications précédentes, **caractérisé en ce que** la longueur axiale respective de chaque segment étagé est identique.

6. Elément d'engrenage selon l'une des revendications précédentes, **caractérisé en ce que** le corps de roue est réalisé sous forme de pièce d'accouplement, sachant en particulier qu'il présente sur un de ses côtés frontaux des griffes, en particulier des griffes s'étendant axialement afin de former un accouplement à griffes.

7. Elément d'engrenage selon l'une des revendications précédentes, **caractérisé en ce qu'**un blocage axial destiné à bloquer des mouvements axiaux relatifs de la couronne par rapport au corps de roue est disposé axialement avant et/ou après la première région axiale.

8. Elément d'engrenage selon l'une des revendications précédentes, **caractérisé en ce que** le segment ovalisé est réalisé sous forme d'hypotrochoïde, d'épitrochoïde ou de polygone dérivé de celles-ci.

9. Elément d'engrenage selon l'une des revendications précédentes, **caractérisé en ce que** la couronne est emboîtée sur le corps de roue, en particulier est emmanchée par pression.

10. Elément d'engrenage selon l'une des revendications précédentes, **caractérisé en ce que** la couronne est fabriquée en bronze et le corps de roue en acier ou en fonte d'acier,
et/ou **en ce que** l'élément d'engrenage est une roue hélicoïdale.

11. Elément d'engrenage selon l'une des revendications précédentes, **caractérisé en ce que** le gradin est réalisé sous forme de saillie radiale annulaire, en particulier contre laquelle la couronne s'applique par un de ses côtés frontaux, sachant en particulier que la deuxième région axiale est disposée axialement après la première région axiale.

12. Elément d'engrenage selon l'une des revendications précédentes, **caractérisé en ce que** la saillie radiale est encliquetée dans au moins trois secteurs d'angle inscrit dans une rainure annulaire du corps de roue, en particulier une rainure en forme d'anneau de cercle.

13. Elément d'engrenage selon l'une des revendications précédentes, **caractérisé en ce qu'**une bague de retenue, une bague d'arrêt à ressort ou analogue est prévue comme blocage axial supplémentaire dans une troisième région axiale dans une rainure annulaire, s'étendant sur tout le pourtour en direction circonférentielle, du corps de roue et/ou de la couronne, sachant en particulier que la troisième région axiale est disposée axialement avant la première région axiale,
et/ou **en ce que** le segment réalisé ovalisé de la couronne est réalisé sous la forme d'un évidement à allure polygonale s'étendant de manière étagée en direction axiale.

14. Elément d'engrenage selon l'une des revendications précédentes, **caractérisé en ce que** la saillie présente un biais d'introduction.
